# FASCICULE DE BREVET EUROPEEN

(11) **EP 2 253 534 B1**
(45) Date de publication et mention de la délivrance du brevet: **15.04.2015**
(21) Numéro de dépôt: 10004036.9
(22) Date de dépôt: 16.04.2010
(51) Int. Cl.: B64C 27/35, B64C 27/32, B64C 27/00, F16F 7/116

(54) **Dispositif à masses concentrées pour réduire les vibrations engendrées par un rotor de sustentation d'un giravion, et moyeu d'un rotor muni d'un tel dispositif**
Vorrichtung mit konzentrierten Massen zum Reduzieren der Schwingungen, die von einem Auftriebsrotor eines Drehflügelflugzeugs erzeugt werden, und mit einer solchen Vorrichtung ausgestattete Rotornabe
Device with concentrated masses for reducing the vibration caused by a lift rotor of a rotorcraft, and hub of a rotor provided with such a device

(30) Priorité: 20.05.2009 FR 0902454
(43) Date de publication de la demande: 24.11.2010
(73) Titulaire: Airbus Helicopters, 13725 Marignane Cedex (FR)
(72) Inventeur: Girard, Vincent, 13770 Venelles (FR); Mazet, Stéphane, 81375 München (DE)
(74) Mandataire: Pouillot, Laurent Pierre Paul

(56) Documents cités:
- EP-A1- 0 790 180
- FR-A1- 2 416 839
- US-A- 4 372 431
- US-A- 5 775 472

## Description

La présente invention concerne un dispositif à masses concentrées pour réduire les vibrations engendrées par un rotor de sustentation d'un giravion, et le moyeu d'un rotor muni d'un tel dispositif.

En effet, le fonctionnement d'un rotor de sustentation d'un giravion, un rotor principal de sustentation et de propulsion d'un hélicoptère par exemple, engendre des efforts parasites au niveau de la tête de ce rotor de sustentation. Ces efforts parasites induisent alors des vibrations qui se propagent dans le fuselage, ces vibrations étant notamment sensibles au niveau de la cabine de pilotage du giravion.

Pour palier à cet inconvénient, on a réalisé des dispositifs agencés au niveau de la tête du rotor. Conformément à une première solution, on connaît des dispositifs visant à concentrer une masse battante au voisinage de l'axe de rotation du rotor, appelé « dispositif à masse concentrée » par commodité.

Selon le document FR 2416838, on monte sur la partie supérieure du moyeu un premier dispositif à masse concentrée pour réduire lesdites vibrations.

Ce premier dispositif à masse concentrée comporte une masse battante maintenue radialement dans un logement, solidarisé au moyeu, par des moyens élastiques. De plus, cette masse est fixée à l'extrémité supérieure d'une tige.

Cette tige est sensiblement disposée selon l'axe de rotation du rotor dans un évidement du mât rotor du rotor. L'extrémité inférieure de la tige est alors articulée en un point situé sur l'axe de rotation du rotor.

Ainsi, les moyens élastiques tendant à maintenir la masse battante dans une position de repos, la masse battante se déplace dans un plan sensiblement parallèle à la partie supérieure du moyeu du rotor de sustentation, c'est-à-dire dans un plan sensiblement perpendiculaire à l'axe de rotation vertical du rotor. La masse battante s'oppose alors directement aux vibrations engendrées par le rotor.

Or, les efforts induisant les vibrations à réduire et générés en tête de rotor peuvent être décrits via un torseur d'efforts, appelé parfois « torseur tête rotor » par l'homme du métier. Ce « torseur tête rotor » est alors composé de trois moments ainsi que de trois forces résultantes suivants trois axes orthonormés, à savoir :
- deux axes dénommés par la suite et par commodité « premier et deuxième axes résultants » définissant un plan dénommé par la suite « premier plan résultant » parallèle à la partie supérieure du moyeu du rotor et donc sensiblement perpendiculaire à l'axe de rotation vertical du rotor, et
- un axe dénommé « troisième axe résultant » perpendiculaire audit premier plan résultant.

Le premier dispositif à masse concentrée est alors efficace pour filtrer les forces résultantes du « torseur tête rotor » selon les premier et deuxième axes résultants sensiblement parallèles au plan contenant ladite masse battante, mais est inopérant pour la force résultante du « torseur tête rotor » selon le troisième axe résultant sensiblement parallèle à l'axe de rotation du rotor de sustentation et perpendiculaire au plan contenant la masse battante.

De plus, la masse battante mise en oeuvre étant constante, le premier dispositif est surtout efficace lorsque la fréquence d'excitation des vibrations à réduire est proche de la fréquence propre, de fait constante, de cette masse battante.

Le premier dispositif à masse concentrée n'est alors pas vraiment adapté à des fréquences variables.

Pour y remédier, on connaît un deuxième dispositif à masse concentrée par le document FR 2749901.

A l'instar du premier dispositif à masse concentrée, le deuxième dispositif à masse concentrée comporte une masse battante principale maintenue radialement dans un logement. De plus, il est pourvu d'une masse battante de réglage apte à coulisser sur la tige fixée à la masse battante principale et articulée en un point situé sur l'axe de rotation du rotor.

En déplaçant la masse battante de réglage, il devient alors possible d'adapter le dispositif afin de lui permettre de réduire des vibrations de fréquences variables.

Néanmoins, l'absence de filtration des forces résultantes du « torseur tête rotor » selon trois axes orthonormés demeure, et notamment selon le troisième axe résultant sensiblement parallèle à l'axe de rotation du rotor de sustentation.

Le document FR 2575800 présente un amortisseur de vibrations pour un moyeu de rotor d'hélicoptère muni d'une masse battante centrale suspendue dans une enveloppe externe selon trois directions par des ressorts mécaniques et pneumatiques.

Ainsi, une même masse est utilisée pour lutter contre les trois forces résultantes du « torseur tête rotor ».

Bien qu'efficace, cet amortisseur est limité par le fait que les sollicitations selon le troisième axe résultant diffère des sollicitations selon les premier et deuxième axes résultants. Il en résulte de fait une mise au point délicate.

De la même manière, le document EP 0790180, qui est considéré comme l'art antérieur le plus proche et décrit les caractéristiques du préambule de la revendication 1, prévoit de suspendre une masse battante centrale par une pluralité de ressorts, la masse battante centrale étant de plus agencée sur un limiteur de déplacement s'étendant selon un axe vertical.

Enfin, le document US 6443273 divulgue la possibilité de suspendre une masse centrale dans une enveloppe à l'aide de ressorts.

Il est à noter que contrairement à la première solution précitée, une seconde solution vise à répartir des masses battantes autour de l'axe de rotation du rotor de sustentation, par l'intermédiaire de dispositifs dénommés « dispositif à masses réparties » par commodité.

Le document WO 2005/079200 présente un premier dispositif à masses réparties muni deux masses coaxiales et d'un moyen de commande, ce moyen de contrôle étant apte à contrôler la vitesse de rotation desdites masses et leur position angulaire relative.

A l'image des premier et deuxième dispositifs à masse concentrée, le premier dispositif à masses réparties ne parait pas suffisant pour contrer les forces résultantes du « torseur tête rotor » selon trois axes orthonormés, plus particulièrement la force résultante selon le troisième axe résultant sensiblement parallèle à l'axe de rotation du rotor de sustentation.

De même, le document FR 2435391 présente un deuxième dispositif à masses réparties muni deux masses fixées à un arbre traversant la manchette reliant une pale au moyeu d'un rotor de sustentation.

Le document FR 2808526 présente un troisième dispositif à masses réparties muni de masses battantes disposées entre les pales.

Chaque masse battante est alors reliée par une liaison pivotante à un bras d'un support solidaire du moyeu du rotor de manière à constituer un pendule.

Dans ces conditions, le troisième dispositif à masses réparties semble à même de contrer les forces résultantes du « torseur tête rotor » selon trois axes orthonormés.

Par contre, il est particulièrement difficile de régler le troisième dispositif à masses réparties, ce dernier étant soit efficace pour contrer les forces résultantes du « torseur tête rotor » selon les premier et deuxième axes résultants sensiblement parallèles au plan contenant le support des masses, soit efficace pour contrer la force résultante du « torseur tête rotor » selon le troisième axe résultant sensiblement parallèle à l'axe de rotation du rotor de sustentation.

Le document FR 2733483 présente un quatrième dispositif à masses réparties muni d'au moins un corps pendulaire monté sur le rotor afin de pouvoir osciller autour d'un axe de mouvement pendulaire, espacé du centre d'inertie du corps pendulaire.

Par suite, l'état de la technique prévoit soit des dispositifs aptes à filtrer les forces résultantes du « torseur tête rotor » selon un ou deux axes, soit des dispositifs aptes à filtrer les forces résultantes du « torseur tête rotor » selon trois axes ortho-normaux mais relativement difficile à régler pour obtenir des résultats performants selon ces trois axes orthonormés.

La présente invention a alors pour objet de proposer un dispositif pour réduire les vibrations engendrées par un rotor de sustentation d'un giravion efficace pour contrer les forces résultantes du « torseur tête rotor » selon ses trois axes orthonormés.

Selon l'invention, un dispositif à masses concentrées pour réduire les vibrations engendrées par un rotor de sustentation d'un giravion muni d'un moyeu comporte une masse battante principale maintenue radialement dans un plan horizontal par des moyens élastiques principaux à l'intérieur d'une enveloppe apte à être solidarisée au moyeu, la masse battante principale étant fixée à une extrémité supérieure d'une tige qui est apte à s'étendre longitudinalement le long d'un axe de rotation du rotor de sustentation et du moyeu afin qu'une extrémité inférieure de cette tige soit articulée à l'intérieur d'un mât rotor du rotor de sustentation.

Il est à noter que le plan dans lequel est maintenue la masse battante principale est notamment dénommé par commodité plan horizontal dans la mesure où, lorsque le dispositif à masses concentrées est agencé sur un rotor de giravion :
- ledit plan est sensiblement horizontal quand le giravion est posé sur le sol,
- ledit plan est perpendiculaire à l'axe de rotation vertical d'un rotor.

Ce dispositif à masse concentrée est notamment remarquable en ce qu'il comporte une masse battante secondaire suspendue par des moyens élastiques secondaires à l'intérieur d'un évidement de la masse battante principale selon un axe vertical perpendiculaire au plan horizontal, la masse battante secondaire étant solidaire de la masse battante principale en translation dans le plan horizontal.

Par conséquent, la masse battante secondaire est fixée par des moyens élastiques secondaires à l'intérieur de la masse battante principale de manière à pouvoir se déplacer selon un axe vertical relativement à la masse battante principale qui l'accueille.

Par suite, la masse battante principale et la masse battante secondaire sont aptes à se déplacer conjointement selon un plan horizontal parallèle au premier plan résultant du « torseur tête rotor » pour filtrer les forces résultantes de ce « torseur tête rotor » selon les premier et deuxième axes résultants.

De plus, la masse battante secondaire suspendue à l'intérieur de la masse battante principale est apte à se déplacer autour d'une position d'équilibre selon une direction verticale perpendiculaire au plan horizontal dans lequel se déplace la masse battante principale autour d'une position au repos. La masse battante secondaire filtre alors la force résultante du « torseur tête rotor » selon un troisième axe résultant.

Par conséquent, le dispositif à masses concentrées selon l'invention est aisément réglable puisque seule la masse battante secondaire a une action selon ledit troisième axe résultant.

Le dispositif à masses concentrées selon l'invention peut en outre comporter une ou plusieurs des caractéristiques additionnelles qui suivent.

La masse battante principale comportant une partie inférieure formant un boitier apte à accueillir la masse battante secondaire et une partie supérieure obturant cette partie inférieure, le dispositif à masses concentrées comporte au moins un axe de fixation de la partie supérieure à la partie inférieure qui passe au travers d'un orifice de fixation traversant de la masse battante secondaire.

Dès lors, la partie supérieure est solidarisée à la partie inférieure de la masse battante principale pour définir en son sein un évidement dans lequel est agencée la masse battante secondaire.

De plus, selon un autre aspect de l'invention, ce dispositif à masses concentrées comporte avantageusement un moyen de guidage pour garantir le déplacement de la masse battante secondaire à l'intérieur de la masse battante principale selon une direction verticale parallèle voire confondue au troisième axe résultant. Le moyen de guidage empêche alors l'apparition de contraintes indues provoquées par un frottement non maitrisé par exemple.

Selon une première variante, la masse battante principale comportant une partie inférieure formant un boitier apte à accueillir la masse battante secondaire et une partie supérieure obturant cette partie inférieure liées par au moins un axe de fixation, le moyen de guidage comporte au moins cet axe de fixation.

La translation de la masse battante secondaire par rapport à la masse battante principale selon l'axe vertical est alors guidée par le ou les axes de fixation de la partie supérieure de la masse battante principale à sa partie inférieure.

De plus, le moyen de guidage peut comporter au moins une douille à billes, agencée dans un orifice de guidage de la masse battante secondaire autour d'un axe de fixation pour favoriser la translation de la masse battante secondaire. L'orifice de guidage est borgne, partiellement borgne ou traversant.

Selon une deuxième variante, cumulable avec la première variante, le moyen de guidage comporte au moins une douille à billes agencée entre la masse battante principale et la masse battante secondaire. Cette douille à billes entoure alors la masse battante secondaire.

De même, le moyen de guidage peut comporter au moins une bague recouverte d'un matériau autolubrifiant, agencée dans un orifice de guidage de la masse battante secondaire autour d'un axe de fixation pour favoriser la translation de la masse battante secondaire, et/ou au moins une bague recouverte d'un matériau autolubrifiant agencée entre la masse battante principale et la masse battante secondaire.

On se reportera à la littérature pour obtenir d'éventuelles informations relatives aux douilles à billes.

Par ailleurs, les moyens élastiques secondaires comportent optionnellement au moins un ressort inférieur et au moins un ressort supérieur, le ressort inférieur étant précontraint entre une partie inférieure de la masse battante principale et une face inférieure de la masse battante secondaire alors que le ressort supérieur est précontraint entre une partie supérieure de la masse battante principale et une face supérieure de la masse battante secondaire.

Les parties inférieure et supérieure de la masse battante principale étant liées par au moins un axe de fixation, un ressort supérieur et un ressort inférieur peuvent être disposés autour de chaque axe de fixation.

Enfin, le dispositif à masses concentrées comporte éventuellement une masse de réglage agencée sur sa tige.

Outre un dispositif à masses concentrées pour réduire les vibrations engendrées par un rotor de sustentation, l'invention a pour objet un moyeu d'un rotor de sustentation de giravion muni d'une zone inférieure apte à être solidarisée à un mât rotor de giravion.

Un tel moyeu est alors remarquable en ce qu'il comporte une zone supérieure, sensiblement parallèle à sa zone inférieure, solidaire en rotation de l'enveloppe d'un dispositif à masses concentrées selon l'invention.

L'invention et ses avantages apparaîtront avec plus de détails dans le cadre de la description qui suit avec des exemples de réalisation donnés à titre illustratif en référence aux figures annexées qui représentent :
- la figure 1, une vue éclatée d'un dispositif à masses concentrées selon l'invention,
- la figure 2, une coupe à 120 degrés du dispositif à masses concentrée de la figure 1, et
- la figure 3, une coupe partielle d'une masse battante principale selon l'invention.

Les éléments présents dans plusieurs figures distinctes sont affectés d'une seule et même référence.

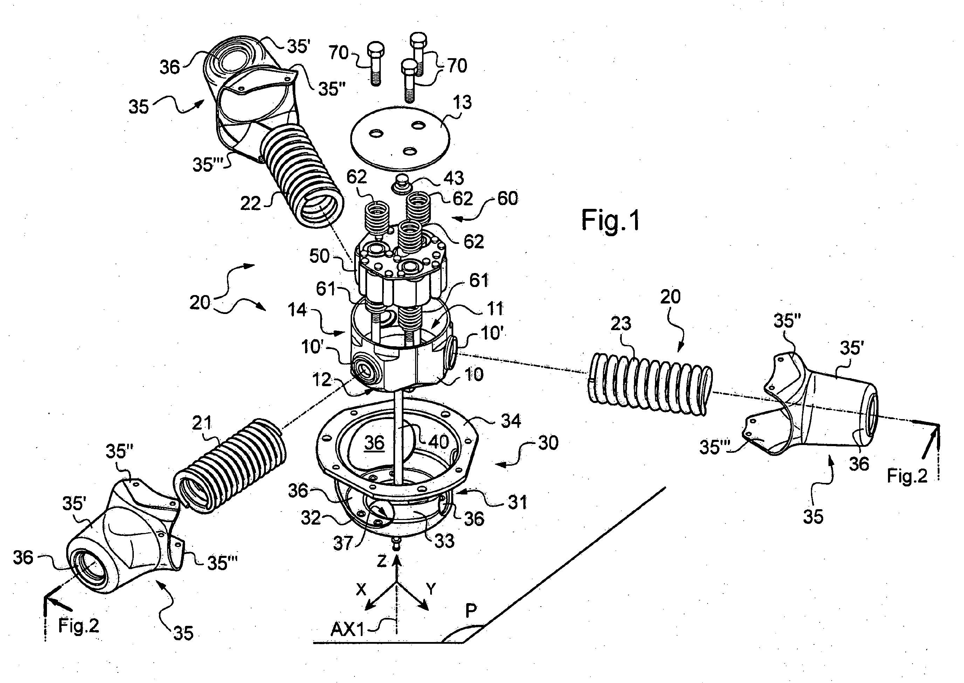

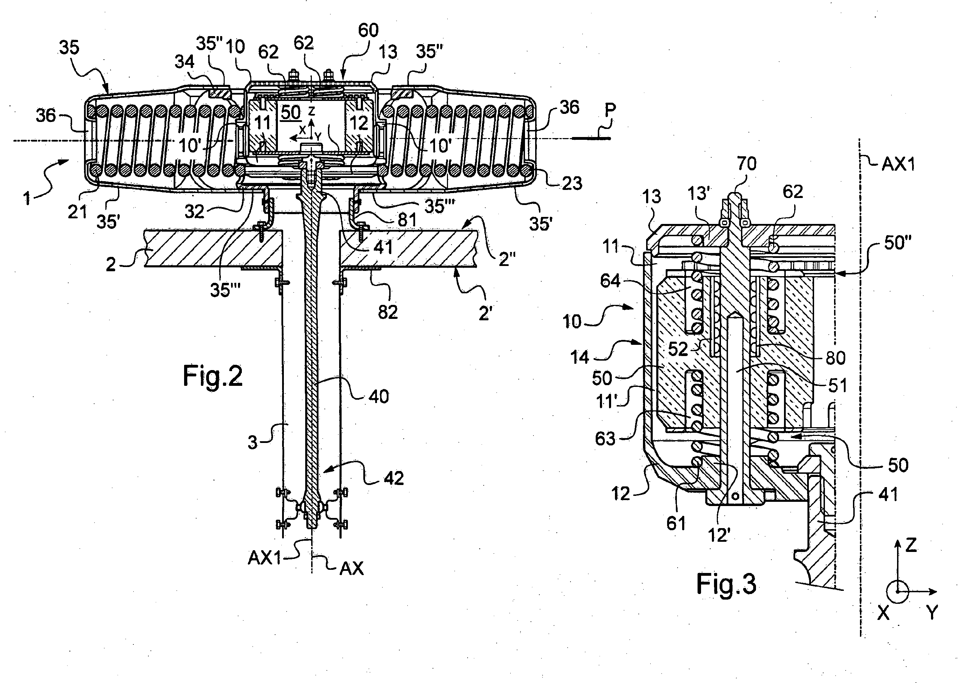

On note que trois axes X, Y et Z orthogonaux les uns par rapport aux autres sont représentés sur les figures 1 et 2, les forces résultantes d'un « torseur tête rotor » étant dirigés parallèlement à ces trois axes.

Les axes X et Y sont dénommés respectivement « premier axe horizontal » et « deuxième axe horizontal ». Les premier et deuxième axes horizontaux définissent conjointement un plan horizontal P.

A contrario, l'axe Z est dit « axe vertical ». Cet axe vertical Z est alors perpendiculaire au plan horizontal P.

Les figures 1 et 2 présentent un dispositif 1 à masses concentrées selon l'invention. Plus précisément, la figure 1 montre une vue éclatée du dispositif 1 à masses concentrées alors que la figure 2 est une coupe de la figure 1 selon la ligne de coupe « fig2 ».

Le dispositif 1 à masses concentrées comporte une enveloppe 30 apte à être solidarisée au moyeu d'un rotor de sustentation.

Dans la réalisation présentée, l'enveloppe 30 a une forme d'étoile à trois branches réparties de manière équidistante.

Plus précisément, en référence à la figure 2, l'enveloppe 30 est fixée par une première collerette 81 à la zone supérieure 2" du moyeu 2, la zone inférieure 2' de ce moyeu 2 étant solidarisée par une deuxième collerette 82 à un mât rotor 3 du rotor de sustentation.

Ainsi, en référence aux figures 1 et 2, l'enveloppe 30 comprend un carter 31 creux muni verticalement d'une lèvre inférieure 32 dirigée vers l'intérieur du carter 31, d'une partie intermédiaire 33 puis d'une lèvre supérieure 34 dirigée vers l'extérieur du carter 31.

Afin que l'enveloppe 30 soit solidarisée au moyeu 2, la lèvre inférieure 32 du carter 31 est fixée par des moyens usuels de type boulons à la première collerette 81.

De plus, l'enveloppe 30 possède des moyens de blocage 35, chaque moyen de blocage 35 ayant un élément tronconique 35' prolongé par une joue inférieure 35"' et une joue supérieure 35". Les joues inférieure 35"' et supérieure 35" d'un moyen de blocage 35 sont alors fixées respectivement aux lèvres inférieure 32 et supérieure 34 du carter 31, par des vis par exemple.

Par suite, l'enveloppe 30 a une forme d'étoile, le carter 31 représentant le centre de l'étoile alors que les éléments tronconiques 35' des moyens de blocage 35 représentent les branches de l'étoile.

On note que les moyens de blocage 35 s'étendent radialement à partir du carter 31, et sont répartis de manière équidistante autour du carter 31.

Afin de filtrer les forces résultantes du « torseur tête rotor » dans le premier plan résultant, parallèle au plan horizontal P, le dispositif 1 à masses concentrées comporte une masse battante principal 10, réalisée en un matériau dense, apte à être placée au niveau de la tête du rotor de sustentation giravion.

A cet effet, la masse battante principale 10 est maintenue radialement dans un plan horizontal P par des moyens élastiques principaux 20 à l'intérieur du carter 31 de l'enveloppe 30 du dispositif 1 à masses concentrées, de manière à être concentrée à proximité de l'axe de rotation AX du rotor de sustentation.

Ainsi, les moyens élastiques principaux 20 comportent des ressorts 21, 22, 23 agencés dans les moyens de blocage 35.

Dès lors, chaque moyen de blocage 35 comportant un épaulement 36 à l'intérieur de son élément tronconique 35', à l'opposé de ses joues inférieure 35"' et supérieure 35", chaque ressort est précontraint entre un épaulement 36 d'un moyen de blocage 35 et une saillie 10' de la masse battante principale 10. L'enveloppe 30 comportant trois branches sur l'exemple représenté, la masse battante principale 10 est munie de trois saillies 10' qui coopèrent avec trois ressorts 21, 22, 23 des moyens élastiques principaux 20.

Plus précisément, la masse principale 10 ayant une partie inférieure 12 en regard de la lèvre inférieure 32 et une partie supérieure 13 en regard de la lèvre supérieure 34, la partie inférieure 12 a la forme d'un boitier, à savoir d'un réceptacle, dont les parois latérales 14 sont munies desdites saillies 10'.

On note que les parties inférieure 12 et supérieur 13 sont liées par au moins un axe de fixation 70. La partie inférieure 12 ayant la forme d'un réceptacle, la masse battante principale 10 comporte un évidement 11 en son sein lorsque les parties inférieure 12 et supérieure 13 sont liées l'une à l'autre.

En outre, la masse battante principale 10 est fixée à l'aide d'un moyen de serrage, à une extrémité supérieure 41 d'une tige 40 qui s'étend longitudinalement le long de l'axe de rotation AX du rotor de sustentation du moyeu 2 et de dispositif 1 à masses concentrées selon l'invention. A cet effet, le carter 31 est muni d'une ouverture 37 afin que la tige 40 puisse saillir de l'enveloppe 30 et se projeter à l'intérieur du mât rotor 3.

L'extrémité inférieure 42 de la tige 40 est alors articulée à l'intérieur du mât rotor 3 du rotor de sustentation par une rotule.

En option, la tige 40 peut comporter une masse de réglage non représentée.

Par ailleurs, le dispositif 1 à masses concentrées selon l'invention comporte avantageusement une masse battante secondaire 50 suspendue par des moyens élastiques secondaires 60, au moins un ressort inférieur 61 et un ressort supérieur 62, à l'intérieur de l'évidement 11 de la masse battante principale 10.

La masse battante secondaire 50 se déplace alors dans le plan horizontal P conjointement avec la masse battante principal 1. Par contre, la masse battante secondaire est apte à se déplacer autour d'une position au repos selon un axe vertical AX1 perpendiculaire au plan horizontal P, à l'intérieur de la masse battante principal 50 et donc relativement à cette masse battante principale 50.

Les moyens élastiques principaux, des ressorts 21, 22, 23, tendent alors à rappeler élastiquement la masse battante principale dans une position de repos. La translation de la masse battante principale, et de son contenu, dans le plan horizontal P permet alors de filtrer lesdites forces résultantes du « torseur tête rotor » dans un premier plan résultant.

La figure 3 présente une coupe d'une masse battante principale 10 et d'une masse battante secondaire 50 selon une variante préférée.

La masse battante secondaire 50 étant insérée à l'intérieur de l'évidement 11 de la masse battante principale 10, la masse battante secondaire 50 comporte un orifice de fixation 51 par axe de fixation 70 pour permettre à cet axe de fixation 70 de solidariser les parties inférieure 12 et supérieure 13 de la masse battante principale 10.

Chaque axe de fixation remplit ainsi une fonction additionnelle en représentant un moyen de guidage de la masse battante secondaire 50.

Les axes de fixation 70 étant parallèles à l'axe vertical AX1, la masse battante secondaire peut uniquement effectuer une translation selon cet axe vertical AX1, par rapport à la masse battante principale 10.

De plus, le dispositif 1 à masses concentrées est muni d'un moyen de guidage dédié, à savoir au moins une douille à billes 52 ou tout autre moyen équivalent assurant un guidage avec faible jeu et faibles frottements. Plus précisément, un orifice de guidage 52 est réalisé dans la masse battante autour de l'orifice de fixation 51.

Cet orifice de guidage 52 peut soit traverser de part en part la masse battante secondaire, soit être un simple alésage à l'instar de la variante représentée sur la figure 3.

Il est en outre concevable d'agencer une douille à billes autour de chaque axe de fixation 70.

A titre de variante ou de façon cumulative, le dispositif 1 à masses concentrées peut comporter une douille à billes dans l'espace 11' séparant radialement la masse battante secondaire 50 des parois latérales 14 de la masse battante principale 10.

A titre de variante, il est possible d'utiliser comme moyen de guidage une bague recouverte d'un matériau autolubrifiant par exemple du Téflon® ou réalisée dans un matériau connu pour son faible coefficient de frottement tel que du bronze. Une telle bague est alors agencée autour des axes de fixation 70 ou dans l'espace 11' séparant radialement la masse battante secondaire 50 des parois latérales 14 de la masse battante principale 10.

La figure 3 présente aussi des moyens élastiques secondaires permettant de suspendre la masse battante secondaire 50 dans la masse battante principale 10.

Les moyens élastiques secondaires comprennent au moins un ressort inférieur 61 et au moins un ressort supérieur 62.

Des premières spires extrémales du ressort inférieur 61 sont alors disposées dans un alésage 63 borgne ménagé dans la face inférieure 50' de la masse battante secondaire alors que des secondes spires extrémales de ce ressort inférieur sont disposées autour d'un épaulement 12' de la partie inférieure 12 de la masse battante principale 10.

De même, des premières spires extrémales du ressort supérieur 62 sont disposées dans un alésage 64 borgne ménagé dans la face supérieure 50" de la masse battante secondaire alors que des secondes spires extrémales de ce ressort supérieur 62 sont disposées autour d'un épaulement 13' de la partie supérieure 13 de la masse battante principale 10.

Il est à noter que les alésages 63, 64 accueillant les ressorts inférieure 61 et supérieur 62 ainsi que les épaulements 12', 13' entourés par ces ressorts inférieure 61 et supérieur 62 sont coaxiaux avec un axe de fixation 70.

Ainsi, il est avantageux de disposer un ressort inférieur 61 et un ressort supérieur 62 autour de chaque axe de fixation 70.

Par suite, les masses battantes principale 10 et secondaire 50 sont solidaires en translation dans le plan horizontal P de manière à filtrer conjointement les forces résultantes du « torseur tête rotor » selon les premier et deuxième axes résultants définissant ce premier plan résultant, parallèle au plan horizontal P.

De plus, la masse battante secondaire 50 est à même d'osciller selon un axe vertical à l'intérieur de la masse battante principale 10 pour filtrer la force résultante du « torseur tête rotor » selon le troisième axe résultant, confondu avec ledit axe vertical.

En outre, la masse battante secondaire 50 et/ou la masse principale 10 peuvent comporter des moyens de réglages de la valeur de chacune des masses. Par exemple, des éléments pesants additionnels peuvent être fixés par des moyens usuels sur la face supérieure ou la face inférieure de ladite masse battante secondaire, ou encore sur les parties inférieure et supérieure de la masse battante principale.

Naturellement, la présente invention est sujette à de nombreuses variations quant à sa mise en oeuvre. Bien que plusieurs variantes aient été décrites, on comprend bien qu'il n'est pas concevable d'identifier de manière exhaustive tous les variantes possibles. Il est bien sûr envisageable de remplacer un moyen décrit par un moyen équivalent sans sortir du cadre de la présente invention.

## Revendications

1. Dispositif à masses concentrées (1) pour réduire les vibrations engendrées par un rotor de sustentation d'un giravion muni d'un moyeu (2), ledit dispositif à masses concentrées (1) comportant une masse battante principale (10) maintenue radialement dans un plan horizontal (P) par des moyens élastiques principaux (20) à l'intérieur d'une enveloppe (30) apte à être solidarisée audit moyeu (2), ladite masse battante principale (10) étant fixée à un extrémité supérieure (41) d'une tige (40), ladite tige (40) étant apte à s'étendre longitudinalement le along d'un axe de rotation (AX) dudit rotor de sustentation et dudit moyeu (2) afin qu'une extrémité inférieure (42) de ladite tige (40) soit articulée à l'intérieur d'un mât rotor (3) dudit rotor de sustentation,
**caractérisé en ce qu'**il comporte une masse battante secondaire (50) suspendue par des moyens élastiques secondaires (60) à l'intérieur d'un évidement (11) de ladite masse battante principale (10) selon un axe vertical (AX1) perpendiculaire audit plan horizontal (P), ladite masse battante secondaire (50) étant solidaire de la masse battante principale (10) en translation dans le plan horizontal (P).

2. Dispositif selon la revendication 1,
**caractérisé en ce que**, la masse battante principale (10) comportant une partie inférieure (12) formant un boitier apte à accueillir ladite masse battante secondaire (50) et une partie supérieure (13) obturant ladite partie inférieure (12), ledit dispositif (1) comporte au moins un axe de fixation (70) de la partie supérieure (13) à la partie inférieure (12) qui passe au travers d'un orifice de fixation (51) traversant de ladite masse battante secondaire (50).

3. Dispositif selon l'une quelconque des revendications 1 à 2,
**caractérisé en ce qu'**il comporte un moyen de guidage pour garantir le déplacement de la masse battante secondaire (50) à l'intérieur de la masse battante principale (10).

4. Dispositif selon la revendication 3,
**caractérisé en ce que**, la masse battante principale (10) comportant une partie inférieure (12) formant un boitier apte à accueillir ladite masse battante secondaire (50) et une partie supérieure (13) obturant ladite partie inférieure (12) liées par au moins un axe de fixation (70), ledit moyen de guidage comporte au moins ledit axe de fixation (70).

5. Dispositif selon la revendication 4,
**caractérisé en ce que** ledit moyen de guidage comporte au moins une douille à billes (80) agencée dans un orifice de guidage (52) de la masse battante secondaire (50) autour d'un axe de fixation (70).

6. Dispositif selon l'une quelconque des revendications 3 à 5,
**caractérisé en ce que** ledit moyen de guidage comporte au moins une douille à billes agencée entre la masse battante principale (10) et la masse battante secondaire (50).

7. Dispositif selon l'une quelconque des revendications 4 à 6,
**caractérisé en ce que** ledit moyen de guidage comporte au moins une bague recouverte d'un matériau autolubrifiant agencée dans un orifice de guidage (52) de la masse battante secondaire (50) autour d'un axe de fixation (70).

8. Dispositif selon l'une quelconque des revendications 3 à 7, **caractérisé en ce que** ledit moyen de guidage comporte au moins une bague recouverte d'un matériau autolubrifiant agencée entre la masse battante principale (10) et la masse battante secondaire (50).

9. Dispositif selon l'une quelconque des revendications 1 à 8,
**caractérisé en ce que** lesdits moyens élastiques secondaires (60) comportent au moins un ressort inférieur (61) et au moins un ressort supérieur (62), ledit ressort inférieur (61) étant précontraint entre une partie inférieure (12) de la masse battante principale (10) et la masse battante secondaire (50) alors que le ressort supérieur (62) est précontraint entre une partie supérieure (13) de la masse battante principale (10) et la masse battante secondaire (50).

10. Dispositif selon la revendication 9,
**caractérisé en ce que** lesdites parties inférieure (12 et supérieure (13) de la masse battante principale (10) étant liées par au moins un axe de fixation (70), un ressort supérieur (62) et un ressort inférieur (61) sont disposés autour de chaque axe de fixation (70).

11. Dispositif selon l'une quelconque des revendications 1 à 10,
**caractérisé en ce qu'**il comporte une masse de réglage agencée sur ladite tige.

12. Système comprenant un moyeu (2) d'un rotor de sustentation de giravion et un dispositif (1) à masses concentrées selon l'une quelconque des revendications 1 à 11, le moyeu étant muni d'une zone inférieure (2') apte à être solidarisée à un mât rotor de giravion,
**caractérisé en ce qu'**il comporte une zone supérieure (2"), sensiblement parallèle à ladite partie inférieure (2'), solidaire en rotation de l'enveloppe (30) du dispositif à masses concentrées.

## Patentansprüche

1. Vorrichtung (1) mit konzentrierten Massen zum Reduzieren der Schwingungen, die von einem Auftriebsrotor eines Drehflügelflugzeugs erzeugt werden, mit einer Nabe (2), wobei die Vorrichtung (1) mit konzentrierten Massen eine Hauptschwingmasse (10) aufweist, die radial in einer horizontalen Ebene (P) durch elastische Hauptmittel (20) im Inneren eines Gehäuses (30), das an der Nabe (2) befestigbar ist, gehaltert wird, wobei die Hauptschwingmasse (10) an einem oberen Ende (41) einer Stange (40) befestigt ist, wobei die Stange (40) sich längs entlang einer Drehachse (AX) des Auftriebsrotors und der Nabe (2) erstrecken kann, damit ein unteres Ende (42) der Stange (40) am Inneren einer Rotorwelle (3) des Auftriebsrotors angelenkt ist,
**dadurch gekennzeichnet, dass** die Vorrichtung eine Nebenschwingmasse (50) aufweist, die durch elastische Nebenmittel (60) im Inneren einer Ausnehmung (11) der Hauptschwingmasse (10) entlang einer vertikalen Achse (AX1) aufgehangen ist, die senkrecht zu der horizontalen Ebene (P) verläuft, wobei die Nebenschwingmasse (50) bezüglich einer gradlinigen Bewegung in der horizontalen Ebene (P) mit der Hauptschwingmasse (10) fest verbunden ist.

2. Vorrichtung nach Anspruch 1,
**dadurch gekennzeichnet, dass** die Hauptschwingmasse (10) einen unteren Teil (12) aufweist, der ein Gehäuse bildet, das die Nebenschwingmasse (50) aufnehmen kann, und einen oberen Teil (13), der den unteren Teil (12) verschließt, wobei die Vorrichtung (1) mindestens eine Befestigungsachse (70) des oberen Teils (13) an dem unteren Teil (12) aufweist, die durch eine Befestigungsöffnung (51) verläuft, die die Nebenschwingmasse (50) durchquert.

3. Vorrichtung nach einem der Ansprüche 1 bis 2,
**dadurch gekennzeichnet, dass** sie ein Führungsmittel aufweist, das die Bewegung der Nebenschwingmasse (50) im Inneren der Hauptschwingmasse (10) gewährleistet.

4. Vorrichtung nach Anspruch 3,
**dadurch gekennzeichnet, dass** die Hauptschwingmasse (10) einen unteren Teil (12) aufweist, der ein Gehäuse bildet, das die Nebenschwingmasse (50) aufnehmen kann, und einen oberen Teil (13), der den unteren Teil (12) verschließt und mit diesem über mindestens eine Befestigungsachse (70) verbunden ist, wobei das Führungsmittel mindestens die Befestigungsachse (70) aufweist.

5. Vorrichtung nach Anspruch 4,
**dadurch gekennzeichnet, dass** das Führungsmittel mindestens eine Kugelführungsbuchse (80) aufweist, die in einer Führungsöffnung (52) der Nebenschwingmasse (50) um eine Befestigungsachse (70) angeordnet ist.

6. Vorrichtung nach einem der Ansprüche 3 bis 5,
**dadurch gekennzeichnet, dass** das Führungsmittel mindestens eine Kugelführungsbuchse aufweist, die zwischen der Hauptschwingmasse (10) und der Nebenschwingmasse (50) angeordnet ist.

7. Vorrichtung nach einem der Ansprüche 4 bis 6,
**dadurch gekennzeichnet, dass** das Führungsmittel mindestens einen Ring aufweist, der mit einem selbstschmierenden Material beschichtet ist und der in einer Führungsüffnung (52) der Nebenschwingmasse (50) um eine Befestigungsachse (70) herum angeordnet ist.

8. Vorrichtung nach einem der Ansprüche 3 bis 7,
**dadurch gekennzeichnet, dass** das Führungsmittel mindestens einen Ring aufweist, der mit einem selbstschmierenden Material beschichtet ist und der zwischen der Hauptschwingmasse (10) und der Nebenschwingmasse (50) angeordnet ist.

9. Vorrichtung nach einem der Ansprüche 1 bis 8,
**dadurch gekennzeichnet, dass** die elastischen Nebenmittel (60) mindestens eine untere Feder (61) und mindestens eine obere Feder (62) aufweisen, wobei die untere Feder (61) vorgespannt ist zwischen einem unteren Teil (12) der Hauptschwingmasse (10) und der Nebenschwingmasse (50), während die obere Feder (62) vorgespannt ist zwischen einem oberen Teil (13) der Hauptschwingmasse (10) und der Nebenschwingmasse (50).

10. Vorrichtung nach Anspruch 9,
**dadurch gekennzeichnet, dass** der untere Teil (12) und der obere Teil (13) der Hauptschwingmasse (10) durch mindestens eine Befestigungsachse (70) miteinander verbunden sind, wobei eine obere Feder (62) und eine untere Feder (61) um jede Befestigungsachse (70) herum angeordnet sind.

11. Vorrichtung nach einem der Ansprüche 1 bis 10,
**dadurch gekennzeichnet, dass** sie eine Regulierungsmasse aufweist, die auf der Stange angeordnet ist.

12. System mit einer Nabe (2) eines Auftriebsrotors eines Drehflügelflugzeugs und einer Vorrichtung (1) mit konzentrierten Massen nach einem der Ansprüche 1 bis 11, wobei die Nabe einen unteren Bereich (2') aufweist, der an einer Rotorwelle des Drehflügelflugzeugs befestigt werden kann,
**dadurch gekennzeichnet, dass** die Nabe einen oberen Bereich (2") aufweist, der im Wesentlichen parallel zu dem unteren Teil (2') ausgerichtet ist und drehfest mit dem Gehäuse (30) der Vorrichtung mit konzentrierten Massen verbunden ist.

## Claims

1. Concentrated-mass device (1) for reducing the vibrations generated by a rotorcraft lift rotor provided with a hub (2), said concentrated-mass device (1) comprising a main oscillating mass (10) held radially in a horizontal plane (P) by main elastic means (20) within a casing (30) suitable for being secured to said hub (2), said main oscillating mass (10) being fastened to a top end (41) of a rod (40), said rod (40) being suitable for extending longitudinally along an axis of rotation (AX) of said lift rotor and of said hub (2) so that a bottom end (42) of said rod (40) is articulated to the inside of a rotor mast (3) of said lift rotor,
**characterised in that** it comprises a secondary oscillating mass (50) suspended by secondary elastic means (60) inside a recess (11) of said main oscillating mass (10) along a vertical axis (AX1) perpendicular to said horizontal plane (P), said secondary oscillating mass (50) being integral with the main oscillating mass (10) in translation in the horizontal plane (P).

2. Device according to claim 1,
**characterised in that**, the main oscillating mass (10) comprising a bottom part (12) forming a housing suitable for receiving said secondary oscillating mass (50) and a top part (13) closing said bottom part (12), said device (1) comprises at least one fastening pin (70) for fastening the top part (13) to the bottom part (12) which passes through a fastening orifice (51) passing through said secondary oscillating mass (50).

3. Device according to any one of claims 1 to 2, **characterised in that** it comprises a guide means for guaranteeing the displacement of the secondary oscillating mass (50) inside the main oscillating mass (10).

4. Device according to claim 3,
**characterised in that**, the main oscillating mass (10) comprising a bottom part (12) forming a housing suitable for receiving said secondary oscillating mass (50) and a top part (13) closing said bottom part (12) which are connected by at least one fastening pin (70), and said guide means comprises at least said fastening pin (70).

5. Device according to claim 4,
**characterised in that** said guide means comprises at least one ball bushing (80) arranged in a guide orifice (52) of the secondary oscillating mass (50) about a fastening pin (70).

6. Device according to any one of claims 3 to 5, **characterised in that** said guide means comprises at least one ball bushing arranged between the main oscillating mass (10) and the secondary oscillating mass (50).

7. Device according to any one of claims 4 to 6, **characterised in that** said guide means comprises at least one ring covered with a self-lubricating material and arranged in a guide orifice (52) of the secondary oscillating mass (50) around a fastening pin (70).

8. Device according to any one of claims 3 to 7,
**characterised in that** said guide means comprises at least one ring covered with a self-lubricating material and arranged between the main oscillating mass (10) and the secondary oscillating mass (50).

9. Device according to any one of claims 1 to 8,
**characterised in that** said secondary elastic means (60) comprise at least one bottom spring (61) and at least one top spring (61), said bottom spring (61) being prestressed between a bottom part (12) of the main oscillating mass (10) and the secondary oscillating mass (50), while the top spring (62) is prestressed between a top part (13) of the main oscillating mass (10) and the secondary oscillating mass (50).

10. Device according to claim 9,
**characterised in that** said bottom part (12) and said top part (13) of the main oscillating mass (10) being connected by at least one fastening pin (70), a top spring (62) and a bottom spring (61) are disposed around each fastening pin (70).

11. Device according to any one of claims 1 to 10,
**characterised in that** it comprises an adjusting mass arranged on said rod.

12. System comprising a hub (2) of a rotorcraft lift rotor and a concentrated-mass device (1) according to any one of claims 1 to 11, the hub being provided with a bottom zone (2') suitable for being secured to a rotorcraft rotor mast, **characterised in that** it comprises a top zone (2"), substantially parallel to said bottom part (2'), integral in rotation with the casing (30) of the concentrated-mass device.
